Europäisches Patentamt

European Patent Office

Office européen des brevets

(11) Veröffentlichungsnummer: **0 091 068**
**B1**

(12) **EUROPÄISCHE PATENTSCHRIFT**

(45) Veröffentlichungstag der Patentschrift:
04.12.85

(21) Anmeldenummer: 83103099.4

(22) Anmeldetag: 29.03.83

(51) Int. Cl.⁴: **G 02 B 27/10, H 01 S 3/13**

(54) Strahlteiler.

(30) Priorität: 06.04.82 DE 3212809

(43) Veröffentlichungstag der Anmeldung:
12.10.83 Patentblatt 83/41

(45) Bekanntmachung des Hinweises auf die Patenterteilung:
04.12.85 Patentblatt 85/49

(84) Benannte Vertragsstaaten:
CH DE FR GB IT LI SE

(56) Entgegenhaltungen:
DE - A - 3 003 467
GB - A - 1 448 676
US - A - 3 701 042
US - A - 4 139 257

(73) Patentinhaber: **Firma Carl Zeiss, D-7920 Heidenheim (Brenz) (DE)**

(72) Erfinder: **Vogt, Peter, Dipl.-Ing., Römerstrasse 25, D-7920 Heidenheim (Brenz) (DE)**
Erfinder: **Kunzmann, Horst, Prof. Dr. Dipl.-Ing., Blibrothstrasse 6, D-3300 Braunschweig (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft einen Strahlteiler zur Detektion des Verhältnisses unterschiedlich polarisierter Komponenten einer im wesentlichen monochromatischen Strahlung.

Derartige Strahlteiler werden beispielsweise bei Einrichtungen zur Stabilisierung der Frequenz von auf mehr als einer Mode schwingenden Lasern benötigt, um das Intensitätsverhältnis der mit unterschiedlicher Polarisation vorliegenden Moden ermitteln und zur Regelung der Resonatorlänge verwenden zu können.

Bekannte Einrichtungen zur Frequenzstabilisierung von Lasern wie die in den DE-PS'en 2 043 734 und 2 053 246 beschriebenen nutzen den zweiten Ausgang der zu stabilisierenden Laserröhre, indem der dort austretende, intensitätsschwache und in der Regel nicht genutzte Teilstrahl durch ein hinter dem Ausgang angeordneten Polarosationsteiler, z. B. ein Wollastonprisma in seine unterschiedlich polarisierten Komponenten zerlegt wird. Dieser zweite Ausgang der Laserröhre ist jedoch nicht bei allen am Markt erhältlichen Röhren vorhanden bzw. zugänglich.

Zur Auskopplung von unterschiedlich polarisierten Komponenten aus dem eigentlichen Nutzstrahl des Lasers ist ebenfalls aus der DE-PS 2 043 734 bekannt zwei um 90° gegeneinander verdrehte Brewsterplatten im Nutzstrahl anzuordnen. Ein derartiger Aufbau hat jedoch mehrere Nachteile. Zum einen ist der Koppelfaktor und damit die Intensität der ausgekoppelten Teilbündel festgelegt, d. h. die Intensitätsminderung des durchgehenden Nutzstrahls eventuell zu groß. Außerdem verursacht der Parallelversatz dieses Strahls durch die Brewsterplatten Justierprobleme. Schließlich müssen die Platten einseitig sehr gut entspiegelt sein, damit keine mehrfache Reflexionen innerhalb der Platte auftreten können.

In der US-PS 3 588 738 ist ein Strahlteiler für den vorstehend genannten Zweck beschrieben, der aus einem im Winkel von 45° gegen den Nutzstrahl geneigten, teildurchlässigen Spiegel sowie einem nachgeschalteten Wollastonprisma besteht. Eine derartige Auskopplung besitzt den Nachteil, daß aufgrund von Phasenverschiebungen an der teildurchlässig verspiegelten Schicht auffallendes linear polarisiertes Licht in elliptisch polarisiertes Licht überführt wird. Außerdem ist die Intensität der beiden senkrecht zueinander polarisierten, ausgekoppelten Teilbündel unterschiedlich, je nach dem welchen Winkel die Teilerfläche mit den Polarisationsrichtungen der auffallenden Komponenten bildet.

Aus der DE-A-3 003 467 ist es grundsätzlich bekannt, ein Beugungsgitter als Strahlteiler zu verwenden, um aus einem abbildenden Strahlengang einen Teil der Strahlung zum Zwecke der Intensitätsmessung auszukoppeln. Eine Detektion unterschiedlich polarisierter Teilbündel im Nutzstrahl eines Lasers ist darin jedoch nicht angesprochen.

Es ist die Aufgabe der vorliegenden Erfindung einen Strahlteiler zur Detektion des Verhältnisses unterschiedlich polarisierter Teilbündel einer im wesentlichen monochromatischen Strahlung zu schaffen, der einen möglichst einfachen und kompakten Aufbau besitzt und eine möglichst geringe Störung des Nutzstrahls verursacht.

Diese Aufgabe wird gemäß dem Kennzeichen des Hauptanspruchs dadurch gelöst, daß im Strahlengang ein Gitter angeordnet ist, das den größten Teil der Intensität in nullter Ordnung liefert, und daß die Polarisation selektierende Analysatoren in Winkelbereichen angeordnet sind, die höheren Beugungsordnungen zugeordnet sind.

Das benötigte Gitter läßt sich hinsichtlich seiner Stufenhöhe stets so anpassen, daß nur der z. B. für Meßzwecke benötigte Teil der auffallenden Strahlung in höheren Ordnungen abgebeugt wird, während der Nutzstrahl das Gitter in nullter Ordnung ungehindert verläßt.

Der Vorteil dieses Strahlteilers ist darin zu sehen, daß der Nutzstrahl bei Verwendung des Gitters von depolarisierenden Einflüssen und störenden Reflexen, wie sie die bekannten Strahlteiler einführen, unbeeinflußt bleibt. Das zweckmäßig verwendete Transmissionsphasengitter kann nämlich direkt auf ein ohnehin im Strahlengang bereits angeordnetes Bauteil, beispielsweise auf eine zur Strahlaufweitung des Lasers dienende Linse aufgebracht werden, so daß überhaupt keine zusätzlichen Grenzflächen entstehen, die zu entspiegeln wären.

Da mit dem Strahlteiler in der Regel zwei senkrecht zueinander polarisierte Komponenten ausgekoppelt werden sollen, ist es vorteilhaft ein Gitter mit symmetrischem Furchenprofil in Bezug auf die Einfallsrichtung zu wählen, das neben der nullten Ordnung im wesentlichen nur in eine höhere Ordnung beispielsweise in die erste Ordnung symmetrisch zu beiden Seiten des Nutzstrahls streut. In den zwei diesen Beugungsordnungen zugeordneten Winkelbereichen lassen sich dann hinter relativ zueinander gekreuzten Analysatoren zwei in Differenzschaltung betriebene Detektoren anordnen, mit denen das Intensitätsverhältnis der polarisierten Komponenten gemessen wird.

Nachstehend wird ein Ausführungsbeispiel der vorliegenden Erfindung anhand der beigefügten Zeichnungen näher erläutert:

Mit 1 ist ein sogenannter zwei Moden Helium/Neon-Laser bezeichnet, in dessen durch die Spiegel 2, 3 begrenzten Resonator sich also zwei in ihrer Frequenz nur sehr gering unterscheidende, aber senkrecht zueinander polarisierte, stabile Moden ausbilden. Der über den Spiegel 3 ausgekoppelte Strahl, der demzufolge aus zwei unterschiedlich polarisierten Komponenten besteht, wird von den Linsen 4 und 6 für interferometrische Meßzwecke aufgeweitet.

Auf die Rückseite der ersten Plankonvexlinse 4 ist ein Phasengitter 5 aufgelegt, das 80% der Intensität der von Laser 1 ausgehenden Strahlung mit einer Wellenlänge von 630 nm in nullter Ordnung, d. h. ungebeugt transmittiert. Das Gitter besitzt eine Gitterkonstante von 5 μm und ein rechteckförmiges Furchenprofil.

Je ca. 10% der Intensität der einfallenden Strahlung werden von dem Gitter 5 in die 1. bzw. -1. Ordnung abgebeugt und fallen auf Polarisationsfolien 9 bzw. 10, die auf je eine Kondensorlinse 7 bzw. 8 aufgebracht sind. Diese Kondensorlinsen leuchten die lichtempfindlichen Flächen der photoelektrischen Empfänger 11 bzw. 12 aus, deren Ausgangssignale von einem Differenzverstärker 13 zur Stabilisierung der Länge des Laserresonators und damit zur Frequenzstabilisierung verwendet werden kann. Die Bauteile 4—12 sind in einem gemeinsamen, lichtdichten Gehäuse 14 zu einer Baueinheit zusammengefaßt.

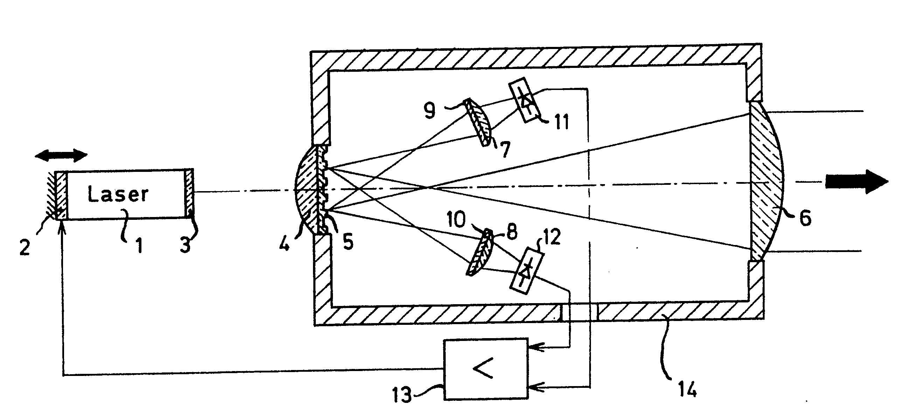

## Patentansprüche

1. Strahlteiler zur Detektion des Verhältnisses unterschiedlicher polarisierter Komponenten einer im wesentlichen monochromatischen Strahlung bei dem mit zwei Detektoren (11, 12) die Intensität der beiden Komponenten festgestellt wird, dadurch gekennzeichnet, daß im Strahlengang ein Gitter (5) angeordnet ist, das den größten Teil der Intensität in nullter Ordnung liefert, und daß die Polarisation selektierende Analysatoren (9, 10) vor den Detektoren (11, 12) in Winkelbereichen angeordnet sind, die höheren Beugungsordnungen zugeordnet sind.

2. Strahlteiler nach Anspruch 1, dadurch gekennzeichnet, daß es sich bei dem Gitter (5) um ein Transmissionsgitter handelt.

3. Strahlteiler nach Anspruch 2, dadurch gekennzeichnet, daß es sich bei dem Gitter (5) um ein Phasengitter handelt.

4. Strahlteiler nach Anspruch 1—3, dadurch gekennzeichnet, daß es sich bei dem Gitter (5) um eines mit symmetrischem Furchenprofil handelt, das neben der nullten Ordnung im wesentlichen nur in einer höheren Ordnung beugt.

5. Strahlteiler nach Anspruch 2—4, dadurch gekennzeichnet, daß das Gitter (5) direkt auf ein im Strahlengang liegendes optisches Bauteil (4) aufgesetzt ist.

6. Strahlteiler nach Anspruch 5, dadurch gekennzeichnet, daß das Gitter (5) auf die Aufweitungsoptik für einen Laser aufgesetzt ist.

7. Strahlteiler nach Anspruch 1—6, dadurch gekennzeichnet, daß als Analysatoren Polarisationsfolien (9, 10) verwendet sind.

8. Strahlteiler nach Anspruch 1—7, dadurch gekennzeichnet, daß zwei in Differenzschaltung betriebene Detektoren (11, 12) verwendet werden.

9. Strahlteiler nach Anspruch 8, dadurch gekennzeichnet, daß die Aufweitungsoptik (4, 6) mit dem Gitter (5), die Analysatoren (9, 10) und die Detektoren (11, 12) zu einer gemeinsamen Baueinheit zusammengefaßt sind.

10. Strahlteiler nach Anspruch 8, dadurch gekennzeichnet, daß das Ausgangssignal der Detektoren (11, 12) zur Stabilisierung der Ausgangsleistung und/oder Wellenlänge der die Strahlung aussendenden Quelle (1) dient.

## Claims

1. A beam splitter for detecting the condition of differently polarized components of a beam of substantially monochromatic radiation comprising two detectors (11, 12) for measuring the intensity of both components, characterized by the fact that a grating (5) which supplies the greatest part of intensity at zero order is arranged in the beam path and that analyzers (9, 10) to select polarization components are positioned in angular regions corresponding to higher orders of diffraction.

2. A beam splitter according to claim 1, characterized by the fact that the grating (5) is a transmission grating.

3. A beam splitter according to claim 2, characterized by the fact that the grating (5) is a phase grating.

4. A beam splitter according to claim 1—3, characterized by the fact that the grating (5) is a grating with symmetric groove profile and diffracts, in addition to the zero order, substantially only into one higher order.

5. A beam splitter according to claims 2—4, characterized by the fact that the grating (5) is directly on an optical component (4) which lies in the path of the beam.

6. A beam splitter according to claim 5, characterized by the fact that the grating (5) is on the expansion optical system for a laser.

7. A beam splitter according to claim 1—6, characterized by the fact that the polarization sheets (9, 10) are used as analyzers.

8. A beam splitter according to claims 1—7, characterized by the fact that two detectors (11, 12) operated in a difference circuit are used.

9. A beam splitter according to claim 8, characterized by the fact that the expansion optical system (4, 6) together with the grating (5), the analyzers (9, 10) and the detectors (11, 12) are combined to form a single assembly.

10. A beam splitter according to claim 8, characterized by the fact that the output signal of the detectors (11, 12) serves to stabilize the output power and/or wavelength of the source (1) emitting the radiation.

## Revendications

1. Séparateur de faisceau pour détecter le rapport de composantes polarisées différemment d'un rayonnement essentiellement monochromatique, sur lequel l'intensité des deux composantes est déterminée à l'aide de deux détecteurs (11, 12), caractérisé en ce que le trajet du faisceau contient un réseau (5) qui délivre la majeure partie de l'intensité dans l'ordre zéro et que les analyseurs sélecteurs de polarisation (9, 10) sont disposés devant les détecteurs (11, 12) dans des zones d'angle qui sont associées à des ordres de diffraction supérieurs.

2. Séparateur selon la revendication 1, caractérisé en ce que le réseau (5) est un réseau de transmission.

3. Séparateur selon la revendication 2, caractérisé en ce que le réseau (5) est un réseau de phase.

4. Séparateur selon une des revendications 1—3, caractérisé en ce que le réseau (5) est un réseau à profil rainuré symétrique qui, à côté de l'ordre zéro, ne diffracte essentiellement que dans un ordre supérieur.

5. Séparateur selon une des revendications 2—4, caractérisé en ce que le réseau (5) est disposé directement sur un élément optique (4) situé sur le trajet du faisceau.

6. Séparateur selon la revendication 5, caractérisé en ce que le réseau (5) est disposé sur l'optique d'élargissement pour un laser.

7. Séparateur selon une des revendications 1—6, caractérisé en ce que des feuilles de polarisation (9, 10) sont utilisées comme analyseurs.

8. Séparateur selon une des revendications 1—7, caractérisé en ce qu'il comprend deux détecteurs (11, 12) utilisés dans un montage différentiel.

9. Séparateur selon la revendication 8, caractérisé en ce que l'optique d'élargissement (4, 6), le réseau (5), les analyseurs (9, 10) et les détecteurs (11, 12) sont réunis en une unité.

10. Séparateur selon la revendication 8, caractérisé en ce que le signal de sortie des détecteurs (11, 12) sert à la stabilisation de la puissance de sortie et/ou de la longueur d'onde de la source (1) émettant le rayonnement.

Laser

1  2  3  4  5  6  7  8  9  10  11  12  13  14